# FASCICULE DE BREVET EUROPEEN

(11) **EP 0 468 014 B1**
(45) Date de publication et mention de la délivrance du brevet: **02.01.1997**
(21) Numéro de dépôt: 91903327.4
(22) Date de dépôt: 30.01.1991
(51) Int. Cl.: F02B 25/14

(54) **PERFECTIONNEMENTS AUX MOTEURS A COMBUSTION INTERNE A DEUX TEMPS, A ALLUMAGE PAR COMPRESSION DE TYPE DIESEL**
ZWEITAKTBRENNKRAFTMASCHINE MIT KOMPRESSIONSZÜNDUNG
IMPROVEMENTS TO TWO-STROKE INTERNAL COMBUSTION ENGINES WITH DIESEL-TYPE COMPRESSION IGNITION

(30) Priorité: 13.02.1990 FR 9001683
(43) Date de publication de la demande: 29.01.1992
(73) Titulaire: S.N.C. MELCHIOR TECHNOLOGIE, 75015 Paris (FR)
(72) Inventeur: MELCHIOR, Jean, F-75014 Paris (FR); ANDRE, Thierry, F-75007 Paris (FR); EDELMANN, Henry, Bernard, F-92310 Sèvres (FR)
(74) Mandataire: Bernasconi, Jean
(86) Numéro de dépôt international: FR9100056
(87) Numéro de publication internationale: WO9112419

(56) Documents cités:
- EP-A- 0 299 385
- DE-A- 3 218 310
- FR-A- 949 642
- FR-A- 2 338 385
- US-A- 4 616 605
- PATENT ABSTRACTS OF JAPAN vol. 9, no. 135 (M-386)(1858) 11 juin 1985, & JP-A-60 17224 (MAZDA) 29 janvier 1985

## Description

L'invention concerne un moteur à combustion interne du type à deux temps, à allumage par compression de type Diesel, qui comprend au moins un cylindre dépourvu de lumières latérales et au moins un piston animé d'un mouvement alternatif dans ce cylindre et délimitant avec ce dernier et avec une culasse une chambre de combustion de volume variable, ladite culasse portant au moins une soupape d'admission et au moins une soupape d'échappement adaptées respectivement à une tubulure d'admission d'air et à une tubulure d'échappement de gaz d'échappement, l'axe de la ou chaque soupape d'admission formant avec l'axe du cylindre un angle compris approximativement entre 30 et 60° de façon telle que la queue de cette soupape soit plus éloignée de l'axe du cylindre que la tête de celle-ci et cette tête étant placée au fond d'un évidement au moins partiellement cylindrique de la culasse de manière que la moitié environ de la tête de la soupape soit entourée avec un faible jeu par la surface de l'évidement et que la profondeur de l'évidement augmente régulièrement de la périphérie vers le centre de la chambre de combustion sans constituer d'étranglement vers celle-ci de telle sorte que, lorsque cette soupape est ouverte, elle débite en dirigeant l'air de sa périphérie vers le piston, pendant le balayage, le long et au voisinage de la génératrice du cylindre la plus éloignée de la ou des soupapes d'échappement, le moteur étant équipé de moyens permettant son démarrage et sa marche à faible puissance.

L'invention exclut donc les moteurs à allumage commandé car leurs chambres de combustion sont alimentées par un mélange homogène d'air et de combustible pré-formé dans un carburateur ou par injection dans la tubulure d'admission pendant la phase de remplissage du moteur, ce qui fait que le problème de l'homogénéisation du mélange dans les chambres de combustion ne s'y pose pas.

Un moteur du type défini en préambule est décrit dans le FR-A-2.338.385 et les moyens permettant son démarrage et sa marche à faible puissance sont décrits notamment dans le FR-A-2.589.518.

L'invention a pour but d'assurer un compromis satisfaisant entre les deux exigences suivantes qui seront étudiées successivement ci-après :
a) assurer un bon balayage, lorsque le piston est au voisinage du point mort bas (PMB) et que les soupapes d'admission et d'échappement sont ouvertes simultanément ;
b) permettre, en perfectionnant à cet égard le moteur décrit dans le susdit FR-A-2.338.385, une combustion rapide et à rendement élevé, lorsque le piston est au voisinage du point mort haut (PMH) et que les soupapes d'admission et d'échappement sont fermées simultanément.

En ce qui concerne tout d'abord le balayage, la culasse doit être aussi perméable que possible, c'est-à-dire qu'elle doit laisser passer le maximum d'air frais pour une différence de pression donnée entre l'admission et l'échappement, et le rendement d'utilisation de l'air (désigné en anglais par "trapping efficiency", c'est-à-dire le rapport entre la masse d'air frais gardée par la chambre de travail et la masse d'air frais traversant la soupape d'admission) doit être aussi élevé que possible. Lorsque le moteur à deux temps est suralimenté par un groupe turbo-compresseur dont la turbine est mue par les gaz d'échappement, le respect des deux critères définis ci-dessus est plus particulièrement avantageux. En effet, le bilan énergétique de la turbine de suralimentation est alors amélioré, ce qui permet de réduire la différence de pression entre l'admission et l'échappement du moteur et par conséquent d'améliorer le rapport air/combustible en permettant une meilleure combustion. En effet, en diminuant la susdite différence de pression,
1 - on diminue la dilution des gaz d'échappement alimentant la turbine, ce qui permet d'augmenter la pression de l'air de suralimentation (énergie plus grande en amont de la turbine);
2 - on augmente le taux de détente de la turbine, ce qui augmente la pression de suralimentation et donc la pression de l'air dans le cylindre ;
3 - on augmente la pression dans le cylindre (qui est plus proche de la pression de suralimentation puisque la différence de pression admission-cylindre-échappement est diminuée).

En ce qui concerne maintenant la combustion, la forme de la chambre de combustion doit être simple de façon non seulement que la fabrication de cette chambre se fasse aux moindres coûts, mais encore que le combustible pulvérisé par l'injecteur puisse atteindre toute la chambre (en évitant les zones d'ombre et les poches difficilement irrigables) et il peut être souhaitable de faciliter la mise en mouvement de l'air par le déplacement du piston coopérant avec le ciel de la culasse. Le "pincement" (désigné par "squish" en anglais) ou chasse transversale de la charge d'air, lorsque le piston arrive au voisinage du PMH, créera d'intenses mouvements d'air dont le sens s'inverse à la descente du piston, ces mouvements d'air favorisant la mise en mélange homogène de celui-ci avec le combustible.

On sait que les moteurs à deux temps sont en général plus chargés thermiquement que les moteurs à quatre temps car
- il s'y produit un cycle moteur par tour ;
- la proportion des gaz d'échappement remis en circulation est importante, ce qui augmente la température des gaz emprisonnés dans la chambre de combustion, à la fermeture simultanée des soupapes d'admission et d'échappement.

L'échange thermique entre les gaz et la paroi de la chambre de combustion est donc plus élevé sur un moteur à deux temps que sur un moteur à quatre temps. La pièce du moteur la plus difficile à refroidir étant le piston, on recherche donc des structures à piston aussi plat que possible qui minimisent la surface de passage de la chaleur vers le piston.

En conclusion, afin d'assurer le compromis défini ci-dessus, on recherche des formes de chambres de combustion qui permettent, de façon simple, d'obtenir :
- une haute perméabilité ;
- un minimum de court-circuit (ou passage direct de l'air frais, de l'admission à l'échappement) ;
- une irrigabilité aisée par le combustible pulvérisé ;
- une surface d'échange thermique vers le piston minimale; et
- accessoirement, une possibilité de réaliser des rapports volumétriques élevés.

A cet effet, le moteur conforme à l'invention est caractérisé en ce que :
- la moitié environ de la tête de la soupape d'admission est entourée tout au long de son trajet avec un faible jeu par la surface de l'évidement et la soupape d'admission ne débite que sur la moitié environ de sa périphérie lorsqu'elle est ouverte,
- un injecteur de combustible débite dans cet évidement,
- la ou les soupapes d'échappement coopèrent avec un siège qui affleure le ciel de la culasse sur sa périphérie et sont agencées de façon à débiter sur environ toute leur périphérie ;
- le piston coopère avec le ciel de culasse de façon à ne laisser, au voisinage du point mort haut, que le jeu de fonctionnement nécessaire entre le piston et la partie du ciel de culasse dans laquelle est ou sont placées la ou les soupapes d'échappement ; et
- le susdit évidement est agencé pour constituer pratiquement à lui seul la chambre de combustion lorsque le piston est au voisinage du point mort haut.

On obtient ainsi un moteur à combustion interne qui atteint bien le but assigné à l'invention.

Ainsi qu'il ressort de ce qui précède, le problème du balayage, c'est-à-dire le remplacement maximal des gaz de combustion par de l'air frais à l'intérieur du cylindre avec le court-circuit minimal de cet air soit directement, soit indirectement avec lesdits gaz de combustion, est en partie résolu dans le FR-A-2.338.385 en faisant débiter la soupape d'admission essentiellement sur la moitié environ de sa périphérie (quitte à compenser la diminution résultante de sa section débitante par un doublement de sa levée) et en dirigeant le flux d'air vers le piston le long de la génératrice du cylindre la plus éloignée de la soupape d'échappement.

Dans ce moteur connu, il est nécessaire que, lorsque la soupape d'admission est entièrement ouverte (dans la dernière partie de son trajet), une partie d'air passe autour de la tête de la soupape directement vers la soupape d'échappement pour balayer la zone voisine de l'injecteur, située environ entre la soupape d'admission et la soupape d'échappement. De plus, le moteur décrit dans ce document ne se prête pas à l'organisation de mouvements d'air et de tourbillons, préférablement de vitesse croissante, induits par le mouvement du piston vers la culasse.

Il est à noter que le FR-A-949.642 décrit un moteur qui diffère du préambule de la revendication 1 mais qui est conforme, dans une large mesure, à sa partie caractérisante. Ce document montre une disposition où les tourbillons induits dans le cylindre pendant l'admission se conservent en étant amplifiés par le mouvement du piston. En revanche, la construction décrite dans ce document n'empêche pas d'importants courts-circuits entre l'admission et l'échappement, courts-circuits directs ou courts-circuits indirects résultant d'un intense mélange de l'air introduit dans le cylindre et des gaz s'écoulant par l'échappement, et présente donc de mauvaises caractéristiques de balayage.

L'invention a pour effet de combiner, par une modification très simple, les avantages des constructions selon les FR-A-2 338 385 et 949 642 (excellentes caractéristiques de balayage et organisation de mouvements d'air favorables à la combustion) tout en éliminant leurs inconvénients individuels alors qu'un homme de métier aurait pu craindre au contraire d'associer ces inconvénients.

L'invention diffère également du brevet US-A-4 616 605 qui, pour améliorer le balayage dans un moteur à deux ou quatre temps, prévoit une forme en cloche de la chambre de combustion, obtenue en augmentant la courbure de la surface intérieure de la chambre de combustion voisine de la ou des soupapes d'échappement de façon à orienter l'air d'admission en direction axiale de la chambre, ce qui présente, en outre, l'inconvénient de créer un étranglement vers la chambre de combustion.

De préférence, le moteur est suralimenté par un groupe turbo-compresseur dont la turbine est mue par les gaz d'échappement.

Selon une construction judicieuse, la surface pincée entre le piston et la partie du ciel de culasse extérieure à l'évidement représente entre environ la moitié et les 3/4 de la surface transversale du piston, ce qui contribue à augmenter la chasse d'air au PMH.

Le susdit angle formé entre l'axe de la ou chaque soupape d'admission et l'axe du cylindre est de préférence égal à 40° environ de façon à dégager au mieux la section de passage dirigée vers la susdite génératrice.

En outre, la levée relative (c'est-à-dire rapportée au diamètre de la tête de soupape) de la ou chaque soupape d'admission est de préférence approximativement double de celle de la ou chaque soupape d'échappement, ce qui permet de compenser le fait que la ou chaque soupape d'admission ne débite que sur la moitié environ de sa périphérie.

Selon une construction avantageuse, le moteur comprend une seule soupape d'échappement, dont l'axe est de préférence parallèle à l'axe du cylindre ou légèrement incliné par rapport à ce dernier axe, et deux soupapes d'admission placées au fond du même évidement partiellement cylindrique.

L'invention va être maintenant exposée plus en détail à l'aide des modes de réalisation représentés aux dessins annexés.

La figure 1 est un schéma de principe montrant les organes principaux d'un moteur selon le FR-A-2.338.385.

Les figures 2 et 3 de ces dessins montrent, en coupe axiale, les éléments essentiels d'un moteur établi selon un premier mode de réalisation de l'invention, dont le piston est respectivement à son point mort bas et à son point mort haut.

La figure 4 représente la culasse de la figure 3, vue par le bas.

La figure 5 montre, en coupe selon la ligne V-V de la figure 6, les éléments essentiels d'un moteur établi selon un deuxième mode de réalisation, représentés en trait plein et en trait interrompu dans les positions qu'ils occupent respectivement lorsque le piston est à son point mort bas et à son point mort haut.

La figure 6 représente la culasse de la figure 5, vue par le bas.

Les figures 7 et 8 montrent, par des vues analogues respectivement à celles des figures 5 et 6, les éléments essentiels d'un moteur établi selon un troisieme mode de réalisation.

La figure 9 enfin, montre une variante des figures 2 et 3.

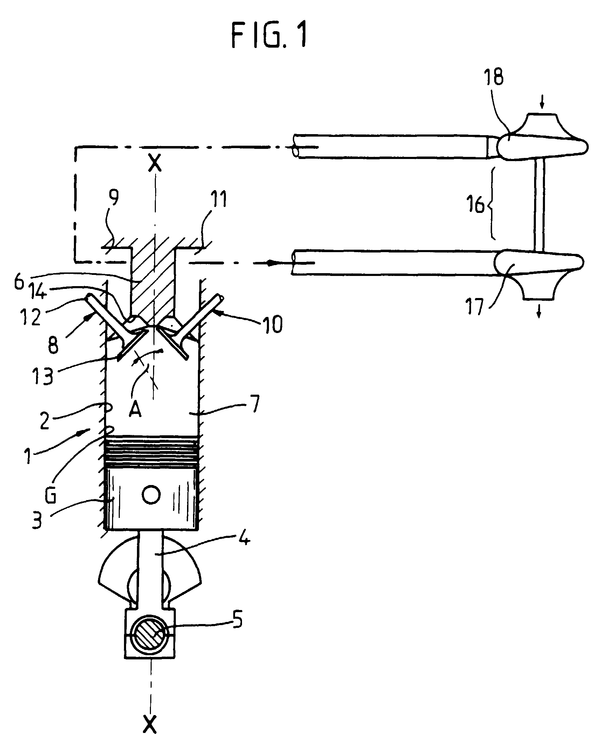

Comme le montre la figure 1 qui représente un moteur connu (FR-A-2.338.385), l'invention concerne un moteur à combustion interne à deux temps 1, à allumage par compression de type Diesel, qui comprend au moins un cylindre 2 dépourvu de lumières latérales et au moins un piston 3 animé d'un mouvement alternatif dans ce cylindre 2 et attelé par une bielle 4 à un vilebrequin 5. Avec le cylindre 2 et avec une culasse 6, le piston 3 délimite une chambre de combustion 7 de volume variable. La culasse 6 porte au moins une soupape d'admission 8 adaptée à une tubulure d'admission d'air 9 et au moins une soupape d'échappement 10 adaptée à une tubulure d'échappement 11. Il est à noter que la soupape d'échappement 10 est représentée à la figure 1 selon une disposition connue et non pas selon l'invention. De façon connue, les mouvements alternatifs des soupapes d'admission 8 et d'échappement 10 sont synchronisés avec les mouvements de rotation du vilebrequin 5.

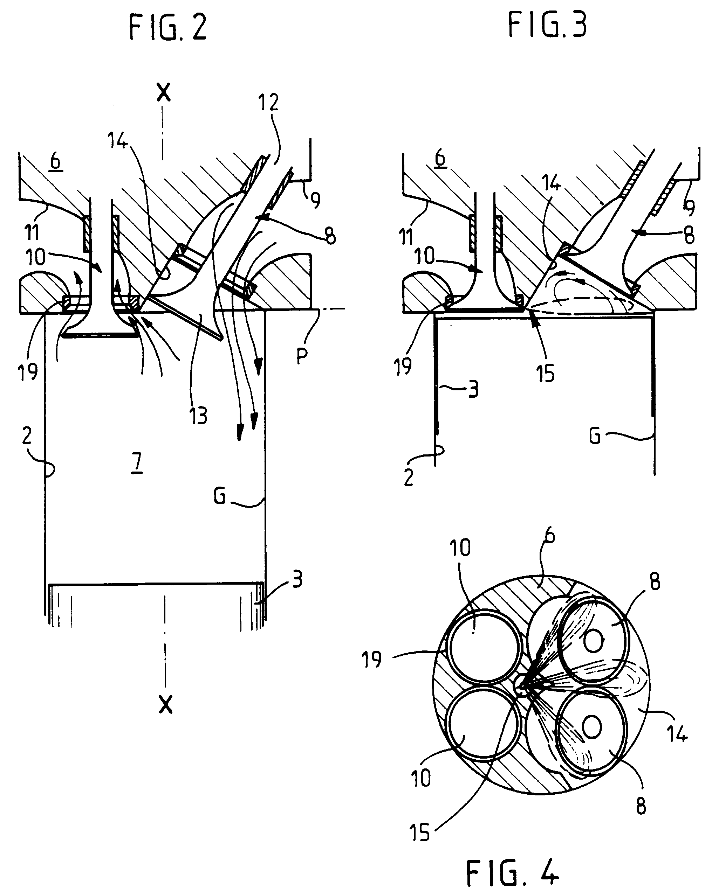

L'axe de la ou chaque soupape d'admission 8 forme, avec l'axe X-X du cylindre 2, un angle A compris approximativement entre 30 et 60° de façon telle que la queue 12 de cette soupape 8 soit plus éloignée de l'axe X-X du cylindre 2 que la tête 13 de ladite soupape 8. Cette tête 13 est placée au fond d'un évidement 14 au moins partiellement cylindrique de la culasse 6 dans lequel débite un injecteur de combustible, non représenté sur la figure 1 mais désigné par 15 en regard de certaines des figures suivantes. La profondeur de l'évidement 14 augmente régulièrement de la périphérie vers le centre de la chambre de combustion 7 sans constituer d'étranglement vers cette chambre 7 de telle sorte que, lorsque la soupape 8 est ouverte, elle ne débite que sur la moitié environ de sa périphérie, c'est-à-dire sur la moitié de gauche de la figure 1, en dirigeant l'air vers le piston 3, le long et au voisinage de la génératrice G du cylindre 2 la plus éloignée de la ou des soupapes d'échappement 10. En d'autres termes, en raison de l'inclinaison de la soupape 8 et de la forme et de l'agencement de l'évidement 14, la moitié environ de la tête 13 de la soupape 8 (moitié de gauche à la figure 2) est entourée avec un faible jeu par la surface de l'évidement 14, ce qui empêche l'air de passer autour de cette moitié, tandis que l'autre moitié (moitié de droite sur la figure 2) de la tête 13 émerge de l'évidement 14 en pénétrant dans la chambre de combustion 7 lorsque le piston 3 est éloigné de son PMH et que la soupape 8 est ouverte, ce qui permet à l'air de passer autour de cette dernière moitié, ainsi qu'il est schématisé par des flèches à la figure 2.

Le moteur est équipé de moyens permettant son démarrage et sa marche à faible puissance. Comme rappelé au début, de tels moyens sont connus et n'ont pas besoin d'être décrits ici.

De préférence mais non obligatoirement, le moteur 1 est suralimenté par un groupe turbo-compresseur 16 constitué d'une turbine 17, mue par les gaz d'échappement qu'elle reçoit de la tubulure 11, et d'un compresseur 18 entraîné mécaniquement par la turbine 17 et refoulant de l'air dans la tubulure 9.

Conformément à l'invention et selon le mode de réalisation qui est représenté à titre d'exemple aux figures 2 à 4 et qui possède deux soupapes d'admission 8 et deux soupapes d'échappement 10, les soupapes d'échappement 10 sont agencées de façon à débiter (c'est-à-dire à laisser passer les gaz d'échappement de la chambre de combustion 7 à la tubulure d'échappement 11) sur pratiquement toute leur périphérie, comme schématisé par des flèches à la figure 2.

En d'autres termes et contrairement à ce qui est représenté à la figure 1, chaque soupape d'échappement 10 ne coopère pas avec un évidement analogue à l'évidement 14 mais avec un siège 19 qui affleure le ciel de la culasse 6 sur sa périphérie. Par ciel de culasse, on entend la surface de la culasse 5 qui contribue à délimiter la chambre de combustion 7.

De plus, le piston 3 coopère avec le ciel de la culasse 6 de façon à ne laisser, au voisinage du PMH et comme représenté à la figure 3, que le jeu de fonctionnement nécessaire entre le piston 3 et la partie du ciel de culasse dans laquelle sont placées les soupapes d'échappement 10.

Enfin, l'évidement 14 est agencé pour constituer pratiquement à lui seul la chambre de combustion 7 lorsque le piston 3 est au voisinage du PMH, comme le montre la figure 3.

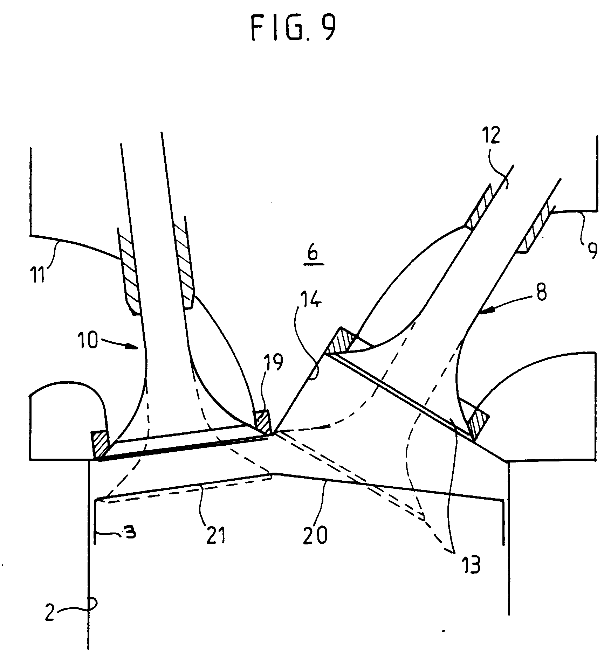

En général, le haut du piston 3 est plat, comme le montre la figure 2, et la partie du ciel de culasse dans laquelle sont placées les soupapes d'échappement 10 est plate elle aussi et placée dans un plan P perpendiculaire à l'axe X-X du cylindre 2. Néanmoins, et comme le montre la figure 9, le haut du piston 3 pourrait avoir une forme en toit, c'est-à-dire se terminer par deux surfaces planes 20 et 21, formant entre elles un angle obtus et situées respectivement en face de la ou des soupapes d'admission 8 et de la ou des soupapes d'échappement 10, le ou les sièges 19 de ces dernières étant disposés parallèlement à la surface 21 en regard. De toute façon, il faut éviter de prévoir dans le ciel de culasse et dans le haut du piston des cavités ouvertes vers la chambre de combustion 7, à l'exception de l'évidement 14, ce qui permet à celui-ci de constituer pratiquement à lui seul la chambre de combustion 7 (comme indiqué à la fin du paragraphe précédent).

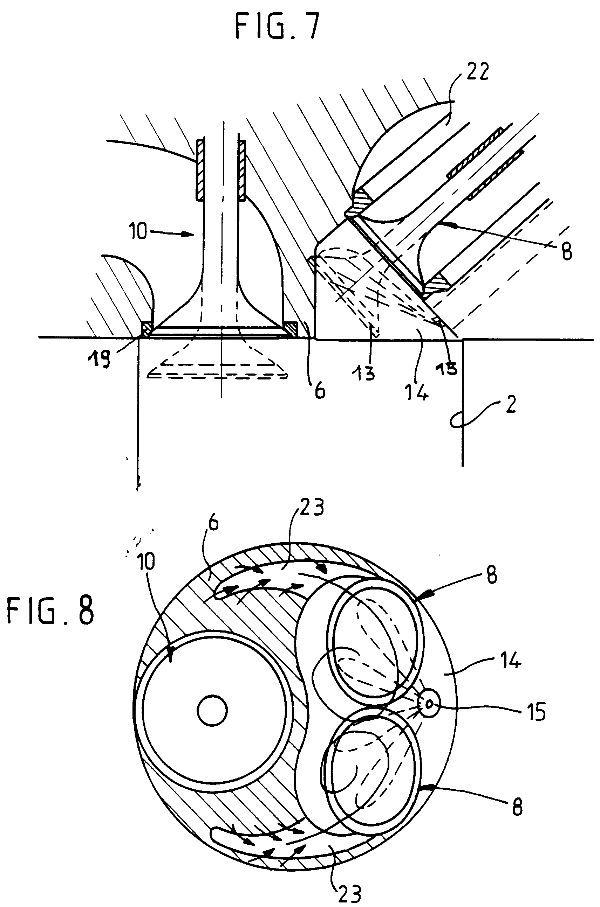

De préférence, la surface pincée entre le piston 3 et la partie du ciel de culasse extérieure à l'évidement 14 représente entre environ la moitié et les trois quarts de la surface transversale du piston 3. Cette surface pincée a été indiquée par des hachures à la figure 4 ainsi qu'aux figures 6 et 8. Pour ne pas surcharger ces figures, les hachures qui devraient recouvrir les têtes des soupapes d'échappement 10 ont été omises.

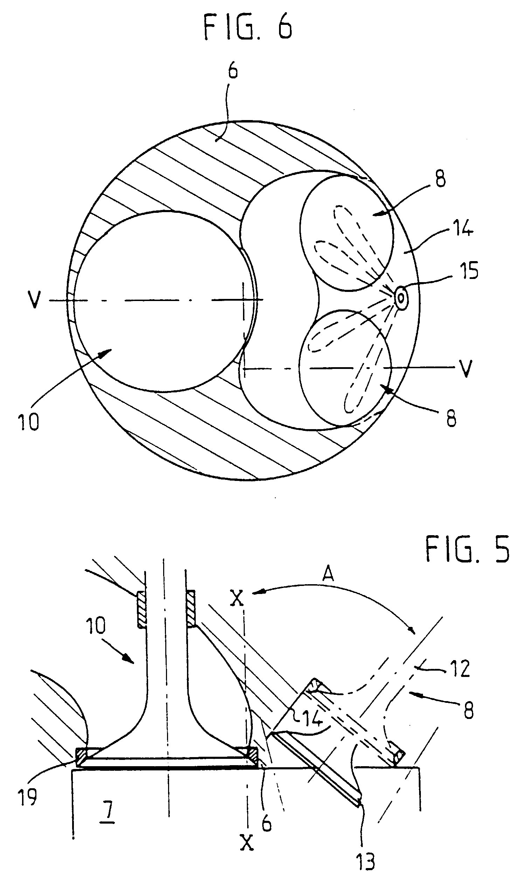

Bien que le mode de réalisation des figures 2 à 4 comporte deux soupapes d'admission 8 et deux soupapes d'échappement 10, il est préférable, comme dans le mode de réalisation des figures 5 et 6 et dans celui des figures 7 et 8, de prévoir deux soupapes d'admission 8 et une seule soupape d'échappement 10 dont l'axe est de préférence parallèle à l'axe X-X du cylindre 2.

L'injecteur 15 est agencé de façon à pulvériser le combustible dans l'évidement 14 en jet ou nappe continus ou discontinus, soit vers l'extérieur (figure 4), soit vers l'intérieur (figures 6 et 8) en direction approximativement radiale.

Quant à l'angle (désigné par A aux figures 1 et 5) entre l'axe de la ou chaque soupape d'admission 8 et l'axe X-X du cylindre 2, on le choisit de préférence égal à environ 40°. Le choix de cet angle est dû à un compromis entre diverses exigences contradictoires, dont celle de pouvoir usiner l'évidement 14 et de monter la ou les soupapes d'admission 8 dans la culasse 6 par le ciel de celle-ci. Selon les modes de réalisation des figures 2 à 6, on voit que la tête 13 de chaque soupape d'admission 8 ne rencontre aucun obstacle à un déplacement de haut en bas (si l'on suppose bien entendu que la tige ou queue 12 de cette soupape 8 a été libérée de sa liaison avec le culbuteur ou autre commande usuelle de son mouvement), ce qui permet d'apprécier que l'exigence définie ci-dessus est respectée.

Comme montré à la figure 7, on peut néanmoins choisir un angle A plus grand, mais il faut alors associer aux soupapes d'admission 8 un système de chapelle 22 permettant de monter et démonter ces soupapes 8 par le côté de la culasse 6 éloigné de la chambre de combustion 7, car la paroi de l'évidement 14 forme alors un obstacle infranchissable.

Comme montré à la figure 8, il est avantageux de ménager, dans la partie du ciel de la culasse 6 qui est extérieure à l'évidement 14, au moins une rainure 23 dont la section transversale et/ou la profondeur diminuent à mesure que l'on s'éloigne de l'évidement 14. Cette rainure 23 aura avantageusement la forme d'un demi-croissant.

Enfin, pour tenir compte du fait que la ou les soupapes d'admission 8 ne débitent que sur une fraction de leur périmètre alors que la ou les soupapes d'échappement 10 débitent sur environ tout leur périmètre, il est avantageux que la levée relative de la ou chaque soupape d'admission 8 soit approximativement double de la levée relative de la ou chaque soupape d'échappement 10.

On obtient ainsi un moteur dont le fonctionnement est le suivant.

Lors du balayage (voir la figure 2), l'air débité par la ou les soupapes d'admission 8 est dirigé le long de la génératrice G définie ci-dessus ou près de et parallèlement à cette génératrice, ce qui minimise les risques de court-circuit avec la ou les soupapes d'échappement 10.

Lors de la combustion (lorsque le piston 3 se rapproche du PMH comme montré à la figure 3), l'espace compris entre le piston 3 et la partie "pincée" du ciel de culasse (partie recouverte de hachures à la figure 4) diminue de volume jusqu'à une valeur quasi nulle et l'air enfermé dans cet espace est chassé violemment vers l'évidement 14 en y créant des mouvements tourbillonnaires qui homogénéisent le mélange de cet air et du combustible préalablement pulvérisé par l'injecteur 15, ce qui assure une combustion optimale.

La ou les rainures 23 de la figure 8, qui peuvent d'ailleurs être utilisées dans les autres modes de réalisation, intensifient les susdits mouvements tourbillonnaires.

## Revendications

1. Moteur à combustion interne à deux temps, à allumage par compression de type Diesel, qui comprend au moins un cylindre (2) dépourvu de lumières latérales et au moins un piston (3) animé d'un mouvement alternatif dans ce cylindre (2) et délimitant avec ce dernier (2) et avec une culasse (6) une chambre de combustion (7) de volume variable, ladite culasse (6) portant au moins une soupape d'admission (8) et au moins une soupape d'échappement (10) adaptées respectivement à une tubulure d'admission d'air (9) et à une tubulure d'échappement (11) de gaz d'échappement, l'axe de la ou chaque soupape d'admission (8) formant avec l'axe (X-X) du cylindre (2) un angle (A) compris approximativement entre 30 et 60 de façon telle que la queue (12) de cette soupape (8) soit plus éloignée de l'axe (X-X) du cylindre (2) que la tête (13) de celle-ci (8) et cette tête (13) étant placée au fond d'un évidement au moins partiellement cylindrique (14) de la culasse (6), de manière que la moitié environ de la tête (13) de la soupape (8) soit entourée avec un faible jeu par la surface de l'évidement (14), et que la profondeur de l'évidement augmente régulièrement de la périphérie vers le centre de la chambre de combustion (7) sans constituer d'étranglement vers celle-ci de telle sorte que, lorsque cette soupape (8) est ouverte, elle débite en dirigeant l'air de sa périphérie vers le piston (3), pendant le balayage, le long et au voisinage de la génératrice (G) du cylindre (2) la plus éloignée de la ou des soupapes d'échappement (10), le moteur (1) étant équipé de moyens permettant son démarrage et sa marche à faible puissance.
caractérisé en ce que :
- la moitié environ de la tête (13) de la soupape d'admission (8) est entourée tout au long de son trajet avec un faible jeu par la surface de l'évidement (14) et la soupape d'admission (8) ne débite que sur la moitié environ de sa périphérie lorsqu'elle est ouverte,
- un injecteur de combustible (15) débite dans cet évidement,
- la ou les soupapes d'échappement (10) coopèrent avec un siège (19) qui affleure le ciel de la culasse sur sa périphérie et sont agencées de façon à débiter sur environ toute leur périphérie ;
- le piston (3) coopère avec le ciel de culasse de façon à ne laisser, au voisinage du point mort haut, que le jeu de fonctionnement nécessaire entre le piston et la partie du ciel de culasse dans laquelle est ou sont placées la ou les soupapes d'échappement (10) ; et
- le susdit évidement (14) est agencé pour constituer pratiquement à lui seul la chambre de combustion lorsque le piston est au voisinage du point mort haut.

2. Moteur selon la revendication 1, caractérisé en ce qu'il est suralimenté par un groupe turbo-compresseur (16) dont la turbine (17) est mue par les gaz d'échappement.

3. Moteur selon l'une des revendications 1 et 2, caractérisé en ce que la surface pincée entre le piston (3) et la partie du ciel de culasse extérieure à l'évidement (14) représente entre environ la moitié et les 3/4 de la surface transversale du piston (3).

4. Moteur selon l'une quelconque des revendications 1 à 3, caractérisé en ce que le susdit angle (A) formé entre l'axe de la ou chaque soupape d'admission (8) et l'axe (X-X) du cylindre (2) est égal à 40°.

5. Moteur selon l'une quelconque des revendications 1 à 4, caractérisé en ce que la levée relative de la ou chaque soupape d'admission (8) est approximativement double de celle de la ou chaque soupape d'échappement (10).

6. Moteur selon l'une quelconque des revendications 1 à 5, caractérisé en ce qu'il comprend une seule soupape d'échappement (10), dont l'axe est de préférence parallèle à l'axe (X-X) du cylindre (2) ou légèrement incliné par rapport à ce dernier axe, et deux soupapes d'admission (8) placées au fond du même évidement partiellement cylindrique (14).

7. Moteur selon l'une quelconque des revendications 1 à 6, caractérisé en ce qu'il est ménagé, dans la partie du ciel de la culasse (6) qui est extérieure à l'évidement (14), au moins une rainure (23) dont la section transversale et/ou la profondeur diminuent à mesure que l'on s'éloigne de l'évidement (14).

## Patentansprüche

1. Zweitakt-Brennkraftmaschine mit Kompressionszündung vom Dieseltyp mit mindestens einem Zylinder (2) ohne laterale Einlaßöffnungen und mit mindestens einem Kolben (3), der zur Hin- und Herbewegung in dem Zylinder (2) antreibbar ist und mit letzterem (2) und mit einem Zylinderkopf (6) einen Brennraum (7) variablen Volumens abgrenzt, wobei der Zylinderkopf (6) mindestens ein Einlaßventil (8) und mindestens ein Auslaßventil (10) aufweist, die jeweils in einem Luftansaugstutzen (9) und in einem Abgasstutzen (11) vorgesehen sind, wobei die Achse des oder jeden Einlaßventils (8) mit der Achse (X-X) des Zylinders (2) einen Winkel (A) von etwa 30° bis 60° derart bildet, daß der Schaft (12) dieses Ventils (8) weiter von der Achse (X-X) des Zylinders (2) entfernt ist als der Kopf (13) desselben (8), und wobei dieser Kopf (13) am Boden einer zumindest teilweise zylindrischen Aussparung (14) des Zylinderkopfs (6) derart angeordnet ist, daß etwa die Hälfte von dem Kopf (13) des Ventils (8) mit geringem Spiel von der Oberfläche der Aussparung (14) umgeben ist und daß die Tiefe der Aussparung gleichmäßig von der Peripherie zum Zentrum des Brennraums (7), ohne eine Einschnürung demgegenüber zu bilden, derart anwächst, daß er beim Öffnen dieses Ventils (8) zum Zuführen von Luft von seiner Peripherie zum Kolben (3) während des Spülens entlang und in der Umgebung des Mantels (G) des Zylinders (2), die am weitesten von dem oder den Auslaßventilen (10) entfernt ist, einen Einlaß bildet, wobei der Motor (1) mit einer Einrichtung zum Ermöglichen des Anlassens und Laufens mit geringer Leistung ausgerüstet ist, dadurch gekennzeichnet, daß:
- etwa die Hälfte des Kopfes (13) des Einlaßventils (8) über die gesamte Länge seines Weges mit geringem Spiel von der Oberfläche der Aussparung (14) umgeben ist und das Einlaßventil (8) nur etwa an der Hälfte seiner Peripherie, wenn es geöffnet ist, einen Einlaß bildet,
- eine Kraftstoff-Einspritzvorrichtung (15) in der Aussparung einen Einlaß bildet,
- das oder die Auslaßventile (10) mit einem Sitz (19) zusammenwirken, der in die Decke des Zylinderkopfes entlang seiner Peripherie eingelassen ist, und derart ausgelegt sind; daß sie etwa entlang ihrer gesamten Peripherie einen Auslaß bilden,
- der Kolben (3) mit der Decke des Zylinderkopfes derart zusammenwirkt, daß er in der Nähe des oberen Totpunkts nur das notwendige Funktionsspiel zwischen dem Kolben und dem Deckenteil des Zylinderkopfes, in dem das oder die Abgasventile (10) angeordnet sind, zuläßt, und
- die besagte Aussparung (14) derart gestaltet ist, daß sie praktisch allein die Brennkammer bildet, wenn der Kolben in der Nähe des oberen Totpunkts ist.

2. Brennkraftmaschine nach Anspruch 1, dadurch gekennzeichnet, daß sie durch eine Turbo-Kompressoranordnung (16) aufgeladen wird, deren Turbine (17) von den Abgasen angetrieben wird.

3. Brennkraftmaschine nach Anspruch 1 oder 2, dadurch gekennzeichnet, daß die zwischen den Kolben (3) und den Deckenteil des Zylinderkopfes außerhalb der Aussparung (14) liegende, eingepreßte Oberfäche etwa zwischen der Hälfte und drei Viertel der transversalen Oberfläche bezüglich des Kolbens (3) bildet.

4. Brennkraftmaschine nach einem der Ansprüche 1 bis 3, dadurch gekennzeichnet, daß der besagte Winkel (A), der zwischen der Achse des oder jeden Einlaßventils (8) und der Achse (X-X) des Zylinders (2) gebildet ist, gleich 40° ist.

5. Brennkraftmaschine nach einem der Ansprüche 1 bis 4, dadurch gekennzeichnet, daß das der relative Hub des oder jedes Einlaßventils (8) etwa doppelt so groß wie der des oder jedes Auslaßventils (10) ist.

6. Brennkraftmaschine nach einem der Ansprüche 1 bis 5, dadurch gekennzeichnet, daß sie ein einziges Auslaßventil (10) aufweist, dessen Achse vorzugsweise parallel zur Achse (X-X) des Zylinders (2) oder leicht geneigt in Bezug auf diese letztere Achse verläuft, und daß sie zwei Einlaßventile (8) aufweist, die am Boden der selben teilweise zylindrischen Aussparung (14) angeordnet sind.

7. Brennkraftmaschine nach einem der Ansprüche 1 bis 6, dadurch gekennzeichnet, daß er am Deckenteil des Zylinderkopfes (6), der außerhalb der Aussparung (14) liegt, mit mindestens einer Nute (23) ausgespart ist, derer Querschnitt und / oder deren Tiefe sich mit wachsender Entfernung zur Aussparung (14) verringern.

## Claims

1. Two-stroke internal combustion engine with diesel-type compression ignition, which comprises at least one cylinder (2) with no lateral ports and at least one piston (3) which exercises a reciprocating motion inside this cylinder (2) and delimits with the latter (2) and with a cylinder head (6), a variable-volume combustion chamber (7), the said cylinder head (6) carrying at least one inlet valve (8) and at least one exhaust valve (10) which are paired respectively with an air inlet duct (9) and an exhaust gas exhaust duct (11), the axis of the or of each inlet valve (8) forming with the axis (X-X) of the cylinder (2) an angle (A) lying approximately between 30 and 60° so that the stem (12) of this valve (8) is further away from the axis (X-X) of the cylinder (2) than the head (13) of this valve (8) and this head (13) being placed at the bottom of an at least partially cylindrical cavity (14) in the cylinder head (6), so that approximately half of the head (13) of the valve (8) is surrounded, with a small clearance, by the surface of the cavity (14), and the depth of the cavity increases uniformly from the periphery towards the centre of the combustion chamber (7) without constituting a restriction towards the latter such that when this valve (8) is open, it delivers, directing the air from its periphery towards the piston (3), during scavenging, along and close to the furthest generatrix (G) of the cylinder (2) from the exhaust valve or valves (10), the engine (1) being equipped with means allowing it to start and run on low power,
characterized in that:
- approximately half of the head (13) of the inlet valve (8) is surrounded, along its entire path, with a small clearance, by the surface of the cavity (14) and the inlet valve (8) delivers only over approximately half of its periphery when it is open,
- a fuel injector (15) delivers into this cavity,
- the exhaust valve or valves (10) act with a seat (19) which is flush with the roof of the cylinder head on its periphery and are arranged so as to deliver over approximately their entire periphery;
- the piston (3) interacts with the cylinder head roof so that close to top dead centre only the necessary operating clearance is left between the piston and that part of the cylinder head roof in which the exhaust valve or valves (10) is or are placed; and
- the abovementioned cavity (14) is arranged so that when the piston is close to top dead centre, it forms the combustion chamber practically by itself.

2. Engine according to Claim 1, characterized in that it is super-charged by a turbocompressor unit (16), the turbine (17) of which is driven by the exhaust gases.

3. Engine according to one of Claims 1 and 2, characterized in that the area trapped between the piston (3) and that part of the cylinder head roof outside the cavity (14) represents between approximately half and 3/4 of the cross-sectional area of the piston (3).

4. Engine according to any one of Claims 1 to 3, characterized in that the abovementioned angle (A) formed between the axis of the or each inlet valve (8) and the axis (X-X) of the cylinder (2) is equal to 40°.

5. Engine according to any one of Claims 1 to 4, characterized in that the relative lift of the or each inlet valve (8) is approximately twice that of the or each exhaust valve (10).

6. Engine according to any one of Claims 1 to 5, characterized in that it comprises a single exhaust valve (10), the axis of which is preferably parallel to the axis (X-X) of the cylinder (2) or inclined slightly with respect to the latter axis, and two inlet valves (8) placed at the bottom of the same partially cylindrical cavity (14).

7. Engine according to any one of Claims 1 to 6, characterized in that at least one slot (23), the cross-section and/or depth of which reduce as this slot diverges further from the cavity (14) is formed in that part of the roof of the cylinder head (6) which is outside the cavity (14).
